# EUROPEAN PATENT APPLICATION

(11) **EP 2 650 815 A1**
(43) Date of publication of application: **16.10.2013**
(21) Application number: 12184752.9
(22) Date of filing: 17.09.2012
(51) Int. Cl.: G06F 21/34, G06F 21/36, G06F 21/82

(54) **Method of, and system for enabling a secure password entry on a non-secure device**

(30) Priority: 13.04.2012 ZA 201202743
(71) Applicant: Abine Limited, Tortola (VG)
(72) Inventor: Rautenbach, Francois Johannes, 0157 Centurion (ZA); Masie, Stafford Clint, 2196 Guateng (ZA)
(74) Representative: Prock, Thomas

(57) **Abstract**

A method of enabling a secure password entry using a non-secure device and an associated system. One or more random numbers are computed and displayed on a secure peripheral device. The displayed one more random numbers are adjusted on the secure device in response to a user manipulating a password entry mechanism on the non-secure device and an event signal being sent to the secure device. One or more digits of the displayed password on the secure device are replaced with one or more unrelated symbols after a determined amount of time. An output signal is generated in response to the user correctly adjusting the displayed one or more random numbers to one or more digits of a determined password.

## Description

### FIELD OF THE INVENTION

The present invention relates to a method of and a system for enabling a secure password entry using a non-secure device.

### BACKGROUND TO THE INVENTION

In modern society a secure personal identification number (PIN), access code, password or the like is often required to, for example, gain access to a secure system or to authorise a transaction e.g. on a Point of Sale (POS) terminal.

It is well known that conventional PIN or password entry devices (such as keyboards, keypads, touch screens, etc.) can easily be compromised by rogue software (such as Trojans, viruses, spyware and the like). Similarly, data input (in the form of keystrokes, touch input, mouse movements and the like) as well as data output (in the form of screen, display, printouts) may be recorded maliciously from these devices.

In this respect, it is generally known by those in the industry, that the majority of such input devices that do not actively provide a tamper-resistant mechanism are susceptible to data input detection techniques. Devices such as these are therefore generally known as non-secure devices. Examples of such non-secure devices include, personal computers, mobile phones, tablet computers, personal digital assistants, and the like.

From a security perspective, such a non-secure device cannot generally be regarded as acceptable for secure PIN, access code or password entry. It will be appreciated that as a result, a need exists in the industry, for a system that through the use of a non-secure device, is still able to provide a secure method of password entry.

Existing mechanisms of PIN or password entry on a Point of Sale (POS) terminal or the like includes the use of a conventional keypad. It is to be appreciated that in accordance with conventional functioning, the digits of the PIN which are entered onto the keypad are never displayed on the device. Instead, a corresponding number of unrelated typographical characters such as an asterisk (*) or the like are displayed on the device, so as to avoid detection of the password entered, by third parties.

However, it is to be appreciated that conventional keypads of the above nature are vulnerable to attack from third parties through the detection of a user's hand movements, use of recording devices such as Closed Circuit Television (CCTV) cameras or the like, side views of the PIN entry keypad being possible as well as through techniques such as key heat mapping.

It is therefore to be appreciated that a further need exists in the industry for a more secure means of password entry than that which is currently available.

### OBJECT OF THE INVENTION

The object of this invention is to provide a system and method of enabling a secure password entry using a non-secure device, which will at least partially address the issues discussed above.

### SUMMARY OF THE INVENTION

According to a first aspect of the invention, there is provided a method of enabling a secure password entry using a non-secure device, said method comprising the following steps:
computing and displaying one or more random numbers on a secure peripheral device;
adjusting said displayed one more random numbers on said secure device, in response to a user manipulating a password entry mechanism on said non-secure device and an event signal being sent to the secure device;
replacing one or more digits of said displayed password on said secure device with one or more unrelated symbols after a determined amount of time; and
generating an output signal,
in response to said user correctly adjusting said displayed one or more random numbers to one or more digits of a determined password.

In an embodiment of the invention, said step of generating an output signal includes sending a signal to effect a financial transaction between a banking account and an external vendor.

In this embodiment of the invention, said step of generating an output signal and effecting a financial transaction in response to said secure device correctly displaying said determined password, includes approving an underlying transaction between a bank account associated with a banking card and an external, peripheral system.

In an embodiment of the invention, the adjustment of said displayed random number includes said non-secure device transmitting to said secure display unit an indication of said user's adjustment of said displayed password. In this embodiment of the invention, the adjustment of said displayed random number includes said non-secure device sending an event signal to the secure device causing it to increment the number displayed on the secure device by either an entropy of plus one (+1) or an entropy of minus one (-1).

In this embodiment of the invention, said determined password corresponds to a Personal Identification Number (PIN) of said banking card, said banking card being associated with said banking account of said user.

In an embodiment of the invention, said method further comprises the user accepting the adjustment of the displayed random number as correct, in response to which an accept command will be sent to said non-secure device. In this embodiment of the invention, said secure peripheral device will display another randomly generated number in a next password digit position, in response to receiving said accept command from said non-secure device.

In this embodiment, said adjustment provided to said secure device is provided in increments of plus one. In this embodiment, said method includes manipulating said password entry mechanism on said non-secure device so as to adjust said password displayed on the secure device in increments of plus one.

In an embodiment of the invention, said method further comprises said non-secure device transmitting an accept command to said secure display unit, in response to said secure device correctly displaying a determined password of said user.

According to a second aspect of the invention, there is provided a system for enabling a secure password entry using a non-secure device, said system comprising:
a peripheral secure device, including:
   a random number generation means,
   an interfacing means, operable to interface to a non-secure device, and
   a display and concealment means, operable to display said random number and an adjustment of said random number,
a non-secure device, including:
   a random number adjustment means, operable to transfer a determined event signal to said secure device in response to an adjustment request being created by a user with regard to said random number displayed on the secure device, and
   an interfacing means, operable to transfer said event signal to a peripheral secure device, so as to manipulate the password entry;
wherein said system is operable to generate an output signal, in response to a determined password being correctly displayed on said secure device.

In an embodiment of the invention, said generation of an output signal includes sending a signal so as to effect a financial transaction between a banking account and an external vendor.

In an embodiment of the invention, said concealment means includes a display means operable to restrict visibility of said password display to a user of said secure device. In a further embodiment of the invention, said concealment means further includes a password entry replacement means, operable to replace display of said one or more digits of said password with one or more unrelated symbols.

In an example embodiment of the invention, said random number adjustment means is provided in the form of a touch screen with visible cues in the form of a slider or the like. In an alternative embodiment, said random number adjustment means is provided in the form of a keyboard, any key press, a mouse scroll, a click of a mouse button, touch or movement on a track pad or another means of data input such as voice, gestures or physical device movements

In an embodiment of the invention, said secure device and said non-secure device are provided in the form of separate, independent units. In an alternative embodiment, said secure device and said non-secure device are provided in the form of a single, integrated unit.

In an embodiment of the invention, said non-secure device is provided in the form of a mobile device. In this embodiment, said mobile device may be provided in the example form of a cellular telephone, a laptop, a personal digital assistant, personal computer, tablet or other portable computing device or the like.

In an embodiment of the invention, said random number adjustment means is any mechanism operable to initiate a determined event signal, operable to be transmitted to said secure device.

In an embodiment of the invention, said secure display unit is tamper proof.

According to a third aspect of the invention, there is provided a method of effecting a financial transaction, said method comprising the step of:
initiating a financial transaction in response to a signal received from a system, said system comprising a non-secure device in communication with a peripheral secure device;
wherein said peripheral secure device includes:
   a random number generation means,
   an interfacing means, operable to interface to a non-secure device, and
   a display and concealment means, operable to display said random number and an adjustment of said random number
   wherein said non-secure device includes:
a random number adjustment means, operable to transmit a determined event signal to said secure device in response to each plus one adjustment of said displayed random number by a user; and
an interfacing means, operable to transfer a determined event signal to said peripheral secure device, in response to a plus one adjustment or acceptance of said displayed random number by a user.

### BRIEF DESCRIPTION OF THE DRAWINGS

These and other features of this invention will become apparent from the following description of one example described with reference to the accompanying drawings in which:
- **Figure 1**: shows a system for enabling a secure password entry using a non-secure device, in which embodiments of the present invention operate;
- **Figure 2**: shows a flow diagram of a method of enabling a secure password entry using a non-secure device, so as to effect a financial transaction with regard to the system as shown in Figure 1, according to embodiments of the present invention;
- **Figure 3**: shows a flow diagram of a method of enabling a secure password entry using a non-secure device with regard to the secure peripheral device of the system as shown in Figure 1, according to embodiments of the present invention; and
- **Figure 4**: shows a machine in the example form of a mobile device within which a set of instructions, for causing the machine to perform any one or more of the methodologies discussed herein, may be executed.

### DETAILED DESCRIPTION OF THE INVENTION

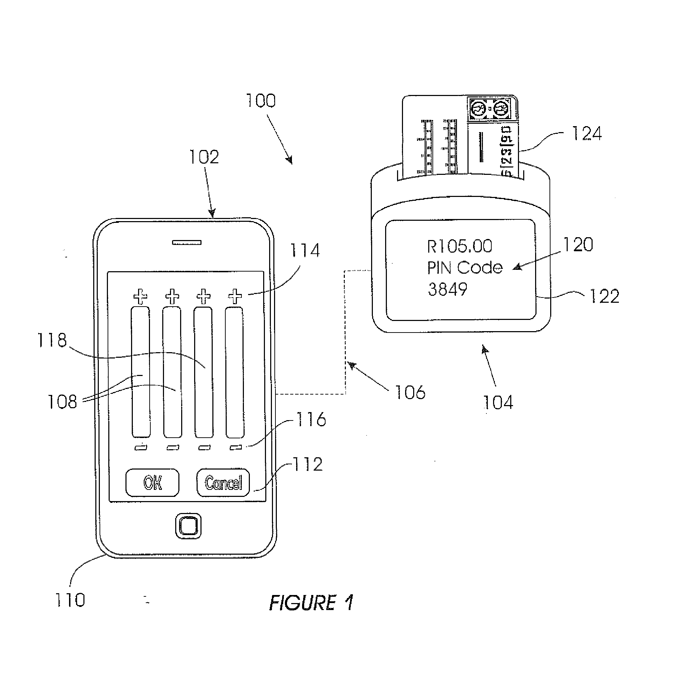

Referring to Figure 1 of the drawings, system for enabling a secure password entry using a non-secure device so as to effect a financial transaction, in accordance with the invention, is generally indicated by reference numeral 100.

The system 100 includes a non-secure device in the example form of a mobile device 102, which in turn includes a screen display 108, a secure peripheral device in the example form of a peripheral display unit 104 which in turn includes a screen display 122. It is to be appreciated that the mobile device 102 could be in the example form of a mobile phone. In this respect, it is to be appreciated that in one embodiment of the invention the system 100 may require more advanced computing ability and connectivity than that provided on a conventional feature phone. In such a scenario, the mobile device 102 will be provided in the example form of a conventional smartphone, tablet or the like.

The mobile device 102 further comprises a password entry mechanism 108 operable to adjust the password displayed on the secure display unit 104 by increments of plus one. The password entry mechanism 108 is exemplified as a touch screen with visible cues in the form of an input method such as a slider 118 or slider adjustment buttons 114, 116. However, it is to be appreciated that the adjustment means 108 may be provided in the form of a keyboard, a mouse scroll, a mouse button, track pad or another means of data input such as voice, gestures or physical device movements. The abovementioned adjustment means 108 is provided on the mobile device 102, in accordance with embodiments of the invention. The touch screen of the mobile device 102 further comprises a submit button 110 and a cancel button 112.

It is to be appreciated that the password entry mechanism 108 is a functional module corresponding to a functional task performed by a processor of the mobile device 102. In example embodiments of the invention, the password manipulation mechanism is facilitated by means of a software program such a software application provided on the mobile phone 102, or the like.

In accordance with the invention, the mobile device 102 is a resource, which is operable to communicate determined information with the peripheral secure device 104 by means of an interfacing means, in the example form of a communication pathway 106. In accordance with the invention, this communication takes places according to a determined protocol and the security restrictions imposed by the peripheral display unit 104 are adhered to. It will be appreciated that a user's password is never entered on or made available to the mobile device 102. In this regard, it is to be appreciated that the password is built up of a set of random numbers that are generated on the secure device and is incremented when an increment number instruction is sent from the mobile device 102 to the peripheral secure device 104.

In accordance with the invention, the peripheral secure device 104 is provided in the form of a secure, tamper proof display unit 104 that can display a password, in the example form of a Personal Identification Number (PIN) 120 or access code. More particularly, the secure device 104 includes a concealment means including a limited visibility screen, the visibility of which is limited to a user of the device. Such a limited visibility screen may be provided in the example form of a conventional privacy screen, which is well-known in the art. Such a privacy screen will, for example, include a readable screen having a 3M™ privacy filter underlying the display area. It will further be appreciated that such a privacy screen is visible from any angle, but the viewable area of the display screen is only viewable from above and does not lend itself to visibility from the three o' clock, six o'clock or 9 o'clock reading positions. It is therefore to be appreciated that such a screen makes accessing the information displayed on the screen difficult from angles other than those of a user of the device.

The secure device 104 further includes a random number generation means (not shown) which is provided in the example form of a true random number generator (TRNG) embedded in the secure device 104.

In this embodiment of the invention, the TRNG is protected against physical and environmental tampering and implements a secure hardware logic algorithm in the form of a cryptographic algorithm. This particular cryptographic algorithm generates session encryption keys in one device (in this case, in the secure device 104). These keys are then recovered in another device (such as the mobile device 102) without the keys actually being transmitted between devices. The keys are therefore completely eliminated from the realm of communication between the mobile device 102 and the secure device 104.

In addition, the random numbers displayed on the secure device 104 are generated from a combination of the output of a hardware random number generator and an internal seed value, which is not externally accessible. The internal seed is stored in the Electrically Erasable Programmable Read-Only Memory (EEPROM) of the secure device 104. The seed value is therefore normally updated once after every power-up or sleep/wake cycle. After the update, this seed value is retained in registers within the chip that are validated if the chip enters sleep mode or the power is removed.

It is to be appreciated that, in accordance with embodiments of the invention, the PIN entry mechanism is provided by a combination of the mobile device 102 and the secure device 104. However, the mobile device 102, as an unsecured device, is decoupled from the secure device 104, in such a manner that the password provided to the secure device 104 cannot be accessed on the mobile phone 102 attached to the secure device 104.

In this example embodiment of the invention, the peripheral display unit 104 is further operable to display the amount 122 of the transaction to be processed by the system.

It is to be appreciated that the system 100 is capable of being used in the processing of payment transactions where a verifiable secure password entry mechanism is required on an unsecure device, such as a mobile phone 102.

In use, the random number generated by the secure device 104 is then adjusted by a user through a manipulation of the password entry mechanism 108 on the mobile device 102. It is to be appreciated that the adjustment is communicated to the secure device 104 in increments or with entropy of plus one (+1). In other words, the mobile device 102 is only able to communicate an offset of +1 or -1. For example, if a first, randomly generated start value is 5 and the toggle wheel is adjusted 8 times, a final value of 3 will be displayed on the secure display 104. The information which is conveyed between the mobile phone 102 and the secure device 104 will however always be either +1 or -1 so as to adjust the displayed value sequentially as follows: 6, 7, 8, 9, 0, 1, 2, 3. It is to be appreciated that in this embodiment of the invention, the password adjustment means 108 is exemplified as a toggle wheel. However, further embodiments are not be limited to this specific implementation and the password adjustment means 108 may be provided in the form of any touch screen with visible cues in the form of an input method such as a slider 118 or slider adjustment buttons 114, 116. It is further to be appreciated that the adjustment means 108 may be provided in the form of a the press of a specified key (like a space bar) or the press of any key (unrelated to the PIN number that is being selected) on the keyboard of the non-secure device, a mouse scroll, a mouse button click, a gesture or any touch on a track pad or touch screen or another means of data input such as voice, or by triggering or activating an accelerometer by any physical device movements

In response to an adjustment being communicated to the secure device 104, the adjusted number will be displayed on the secure device 104, for a predetermined amount of time. Following which, the displayed adjusted number will be replaced with the unrelated symbol after a predetermined amount of time. Furthermore, in the event that the password entry mechanism 108 is idle for a certain amount of time, the displayed, adjusted number will be replaced by an unrelated typographical symbol, such as an asterisk (*) or the like.

A correct password corresponds to a PIN number of a banking card 124 of the user. The banking card 124 will conventionally be placed in a slot provided in the secure device 104. If the password displayed on the secure device 104 corresponds to the PIN of the banking card 124 an underlying financial transaction between the banking account of the user and an external vendor is authorized and facilitated.

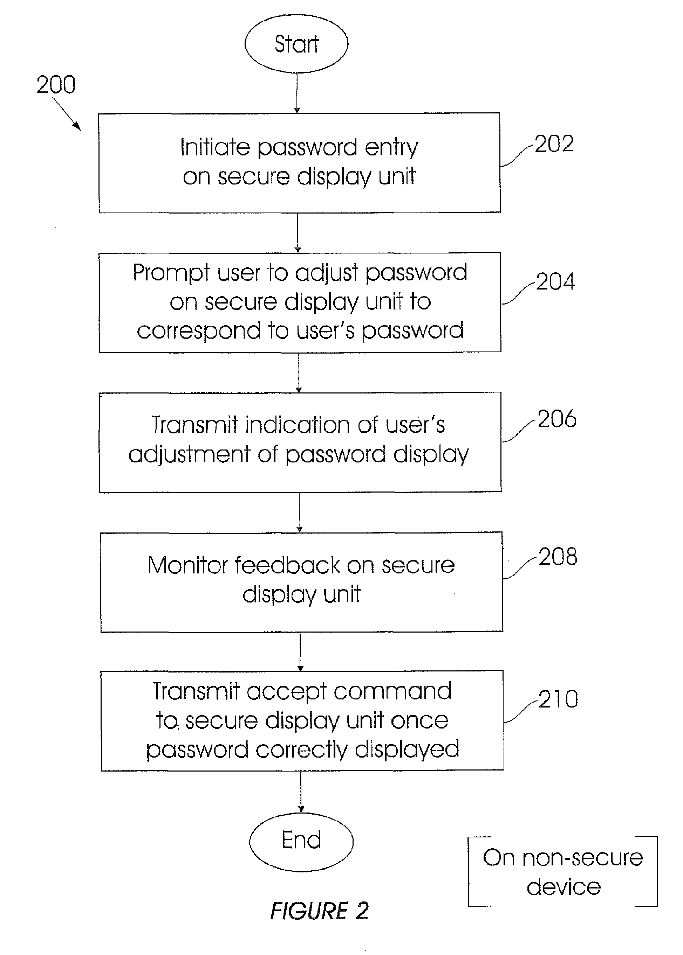

With reference to Figure 2, a method of enabling a secure password entry using a non-secure device of the system 100 as shown in Figure 1 is generally indicated by reference numeral 200.

At block 202, a non-secure device in the example form of a mobile device 102 initiates a password entry transaction with a secure display unit 104. In this regard, it is to be appreciated that the mobile device 102 and the secure display unit 104 can communicate with each other using a determined protocol and in accordance with the security restrictions of the secure display unit 104.

At block 204, after the secure display unit 104 computes and displays a random value for the password which cannot be accessed by the mobile device 102 but is visible to the user controlling the mobile device 102, the mobile device 102 prompts the user to adjust the password displayed on the secure display unit 104. The user will then adjust the password displayed in increments of plus one (+1) or decrements of minus one (-1) through the movement of a scroll wheel or other password entry mechanism. It is appreciated that, at block 204, the user will be prompted in this manner until the user adjusts the password displayed on the secure display unit 104 so that it matches the user's password. It is to be appreciated that in this embodiment of the invention, the password adjustment means 108 is exemplified as a scroll wheel. However, further embodiments are not be limited to this specific implementation and the password entry mechanism may be provided in the form of any touch screen with visible cues in the form of an input method such as a slider 118 or slider adjustment buttons 114, 116. It is further to be appreciated that the adjustment means 108 may be provided in the form of a the press of a specified key (like a space bar) or the press of any key (unrelated to the PIN number that is being selected) on the keyboard of the non-secure device, a mouse scroll, a mouse button click, a gesture or any touch on a track pad or touch screen or another means of data input such as voice, or by triggering or activating an accelerometer by any physical device movements

After the user has adjusted the password, at block 206 the mobile device 102 will transmit an indication of the user's action (for example, up and down clicks) to the secure display unit 104 upon which the secure display unit 104 will update its display to present the newly adjusted password.

In this regard, it is important to note that, in accordance with embodiments of the invention, the password displayed on the secure display unit 104 can only be adjusted in one direction, namely forward or backward. In other words, should the user rest a digit of the displayed password on an incorrect number and the password entry moves onto a second, subsequent digit the user will be necessitated to start the password entry process from scratch to remedy the incorrect first digit having been entered.

At block 208, the mobile device 102 will enable the user to control the input mechanism on the device and monitor the feedback on the secure display unit 104 in order to affect the outcome.

The mobile device 102, at block 210, will then transmit an accept command to the secure display unit once the user is satisfied that the correct password has been displayed on the secure display unit.

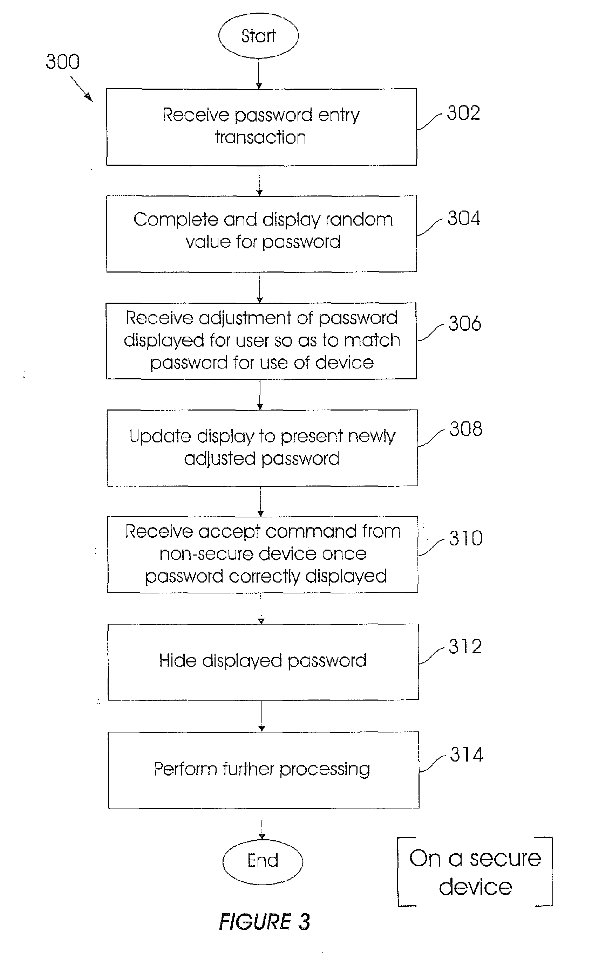

With reference to Figure 3, a method of enabling a secure password entry using a non-secure device of the system 100 as shown in Figure 1 is generally indicated by reference numeral 300.

At block 302, the secure display unit 104 receives a password entry transaction from an accompanying mobile device 102.

The display unit 104, at block 304, then computes and displays a random value for the password. It is to be appreciated that this random value is not accessible by the mobile device 102 itself, but is visible to the user controlling the mobile device 102.

At block 306, the display unit 104 will receive from the user operating the mobile device 102 an adjustment (in the form of an indication of a number up or down clicks, each click corresponding to an increment of +1) of the password it is displaying so that the password of the user is matched on the display unit 104.

The display unit 104, will then update its display to present the newly adjusted password, at block 308.

Once the user is satisfied that the correct password is displayed on the display unit 104, the display unit 104 will, at block 310, receive an accept command from the mobile device 102.

In terms of block 312, it is to be appreciated that the display unit 104 can hide the displayed password by replacing each of the digits displayed by an unrelated typographical character. Furthermore, the display unit 104 can, in terms of block 314, also then continue with further processing as required. It is to be appreciated that the unrelated typographical character is not to be a numeric equivalent of the password of the user nor any derivation of the user's password.

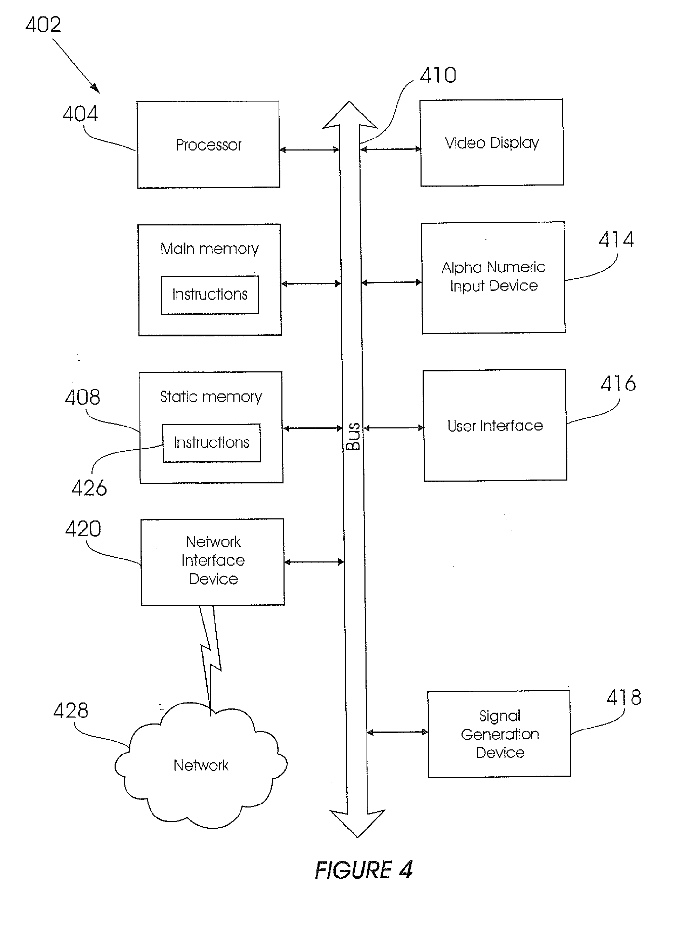

In Figure 4, a diagrammatic representation of a non-secure device 102 in the example form of a mobile device 402 within which a set of instructions, for causing the machine to perform any one or more of the methodologies discussed herein, may be executed. As mentioned above, in alternative embodiments, the machine operates as a standalone device or may be connected to other devices (such as the peripheral display unit 104).

In more detail, the example mobile device 402 includes a conventional processor 404 (e.g. a central processing unit (CPU), a graphics processing unit (GPU) or both), a main memory 406 and a static memory 408, which communicate with each other via a bus 410. The mobile device 402 may further include a conventional video display unit 412 e.g. a liquid crystal display. The mobile device 402 also includes a conventional alphanumeric input device (e.g. a touch screen or keyboard panel) 414, a user interface (UI) 416, a signal generation device 418 (e.g. a speaker) and a network interface device 420.

The main memory component 406 includes one or more sets of instructions and data structures (e.g. a software component 426) and, when configured in accordance with an embodiment of the invention, the software component 426 comprises a variety of instructions and data sets which correspond to functional tasks performed by the processor 404. The functional tasks in question relate to sending a signal to from a non-secure device 102 to a secure device 104, so as to adjust a random number displayed on the secure device 104 so as to facilitate a secure financial transaction, as described in more detail with reference to Figures 1, 2 and 3.

The software component 426 may also reside, completely or at least partially, within the static memory component 408 and the processor 404 also constituting machine-readable media. The software 426 may further be transmitted or received over a network 428 via the network interface device 420 utilizing any one of a number of well-known transfer protocols (e.g. HTTP).

## Claims

1. A method of enabling a secure password entry using a non-secure device, said method comprising the following steps:
computing and displaying one or more random numbers on a secure peripheral device;
adjusting said displayed one more random numbers on said secure device, in response to a user manipulating a password entry mechanism on said non-secure device and an event signal being sent to the secure device;
replacing one or more digits of said displayed password on said secure device with one or more unrelated symbols after a determined amount of time; and
generating an output signal, in response to said user correctly adjusting said displayed one or more random numbers to one or more digits of a determined password.

2. A method as claimed in claim 1, wherein said step of generating an output signal in response to said secure device correctly displaying said determined password, includes approving an underlying transaction between a bank account associated with a banking card and an external, peripheral system, so as to effect a financial transaction between a banking account associated with said banking card and an external vendor.

3. A method as claimed in any of claims 1 or 2, wherein the adjustment of said displayed random number includes said non-secure device transmitting to said secure display unit an indication of said user's adjustment of said displayed password.

4. A method as claimed in any of claims 1 to 3, wherein the adjustment of said displayed random number includes said non-secure device sending an event signal to the secure device causing it to increment the number displayed on the secure device by an entropy of either plus one or minus one.

5. A method as claimed in any of claims 1 to 4, wherein said determined password corresponds to a Personal Identification Number (PIN) of said banking card, said banking card being associated with said banking account of said user.

6. A method as claimed in any of claims 1 to 5, wherein said adjustment provided to said secure device is provided in increments of plus one or decrements of minus one.

7. A method as claimed in claim 6, wherein said method includes manipulating said password entry mechanism on said non-secure device so as to adjust said displayed password in increments of plus one or decrements of minus one.

8. A method as claimed in any of claims 1 to 7, wherein said method further comprises said non-secure device monitoring the feedback provided to said secure peripheral device.

9. A method as claimed in any of claims 1 to 8, wherein said method further comprises said non-secure device transmitting an accept command to said secure display unit, in response to said secure device correctly displaying a determined password of said user.

10. A system for enabling a secure password entry using a non-secure device, said system comprising:
a peripheral secure device, including:
a random number generation means,
an interfacing means, operable to interface to a non-secure device, and
a display and concealment means, operable to display said random number and an adjustment of said random number,
a non-secure device, including:
a random number adjustment means, operable to transfer a determined event signal to said secure device in response to an adjustment request being created by a user with regard to said random number displayed on the secure device, and
an interfacing means, operable to transfer said event signal to a peripheral secure device, so as to manipulate the password entry;
wherein said system is operable to generate an output signal, in response to a determined password being correctly displayed on said secure device.

11. A system as claimed in claim 10, wherein said password concealment means includes a display means operable to restrict visibility of said password display to a user of said secure device.

12. A system as claimed in any of claims 9 or 11, wherein said password concealment means further includes a password entry replacement means, operable to replace display of said one or more digits of said password with one or more unrelated symbols.

13. A system as claimed in any of claims 9 to 12, wherein said secure device and said non-secure device alternatively form a single, integrated unit.

14. A system as claimed in any of claims 9 to 13, wherein said secure display unit is tamper proof.

15. A method of effecting a financial transaction, said method comprising the step of:
initiating a financial transaction in response to a signal received from a system, said system comprising a non-secure device in communication with a peripheral secure device;
wherein said peripheral secure device includes:
a random number generation means,
an interfacing means, operable to interface to a non-secure device, and
a display and concealment means, operable to display said random number and an adjustment of said random number
wherein said non-secure device includes:
a random number adjustment means, operable to transmit a determined event signal to said secure device in response to each plus one adjustment of said displayed random number by a user; and
an interfacing means, operable to transfer a determined event signal to said peripheral secure device, in response to a plus one adjustment or acceptance of said displayed random number by a user.
